## Europäisches Patentamt
## European Patent Office
## Office européen des brevets

(19)

(11) Numéro de publication : **0 236 175 B1**

(12)

# FASCICULE DE BREVET EUROPEEN

(45) Date de publication du fascicule du brevet :
**18.12.91 Bulletin 91/51**

(51) Int. Cl.⁵ : **G01B 17/02**

(21) Numéro de dépôt : **87400180.3**

(22) Date de dépôt : **27.01.87**

(54) **Mesureur d'épaisseurs de revêtements par interférométrie ultrasonore.**

(30) Priorité : **03.02.86 FR 8601740**

(43) Date de publication de la demande :
**09.09.87 Bulletin 87/37**

(45) Mention de la délivrance du brevet :
**18.12.91 Bulletin 91/51**

(84) Etats contractants désignés :
**AT BE CH DE ES FR GB GR IT LI LU NL SE**

(56) Documents cités :
**EP-A- 0 062 272**
**EP-A- 0 092 899**
**PATENT ABSTRACTS OF JAPAN, vol. 9, no.**
**257 (P-396)[1980], 15 octobre 1985; & JP-A-60**
**105 906 (TATEISHI DENKI K.K.) 11.06.1985**

(73) Titulaire : **MTM LEADER SARL**
**Moulin 1 2 allée de la Créativité**
**F-59650 Villeneuve D'Ascq (FR)**

(72) Inventeur : **Boudy, Pierre**
**16 Place J.J. Rousseau**
**F-59235 Wallers (FR)**
Inventeur : **Houze, Martine**
**98 rue de la Gare Vicq**
**F-59970 Fresnes sur Escaut (FR)**
Inventeur : **Bruneel, Prof.**
**37 ter rue de la Résistance Famars**
**F-59300 Valenciennes (FR)**
Inventeur : **Bigotte, Jean-Louis**
**37 avenue Becquart**
**F-59130 Lambersart (FR)**

(74) Mandataire : **Ecrepont, Robert**
**Cabinet Ecrepont 12 Place Simon Vollant**
**F-59800 Lille (FR)**

## Description

L'invention concerne un procédé de correction automatique des variations de rendement de conversion d'un transducteur électro-acoustique en fonction de la fréquence en vue de l'amélioration de la précision d'un dispositif de mesure de l'épaisseur de couches de matériaux par interférométrie ultra-sonore.

L'invention se rapporte également à un dispositif pour la mise en oeuvre de ce procédé ainsi qu'à un dispositif de mesure comportant un tel dispositif.

Notamment mais non exclusivement, l'invention s'applique plus particulièrement à la mesure de l'épaisseur de la couche d'un matériau porté par un support.

En métrologie, on connaît bien la méthode qui permet de déterminer l'épaisseur de telles couches en effectuant un ratio entre la vitesse présumée de propagation des ultrasons dans le matériau constituant la couche à mesurer et la durée de parcours d'une impulsion ultrasonore dans cette couche.

Pour ce faire, il est connu (EP-A-0092889 et JP-A-60105906) de mesurer la durée écoulée entre l'émission d'une impulsion ultrasonore depuis une face externe de la couche et la réception de l'écho de cette impulsion ultrasonore réfléchi par la face interne opposée de la couche.

Cette méthode permet d'effectuer des mesures d'épaisseur sur des couches dont seule une face est accessible à la sonde ou transducteur qui génère et capte les impulsions ultrasonores.

Afin d'optimiser les conditions de mesure, il est prévu de procéder à un contrôle automatique du gain mais ceci en fonction exclusivement d'une valeur établie au préalable et en tenant compte exclusivement de la nature de la couche mesurée.

Malheureusement, les dispositifs mettant en oeuvre une telle méthode dite du temps de parcours exigent, pour donner des résultats fiables, que les épaisseurs à mesurer soient supérieures à une limite de l'ordre du dizième de millimètre.

En effet, lorsque l'épaisseur des couches à mesurer passe en dessous de cette limite, les faces opposées de celles-ci sont tellement proches, que les échos qu'elles renvoient vers le transducteur se chevauchent en un signal quasi-unique.

Le démarquage temporel de ces échos s'avèrant impossible, le procédé dit du temps de parcours ne peut être exploité notamment pour contrôler l'épaisseur de fines couches de matériau, par exemple de couches de peinture dont l'épaisseur avoisine quelques millièmes de millimètre.

Pour tenter de remédier à cet inconvénient, on peut envisager de réduire la durée des émissions d'impulsions ultrasonores nais cette solution reste surtout très théorique.

C'est pourquoi à cette technique basée sur l'écart de temps séparant l'écho réfléchi par la première face et l'écho réfléchi par la deuxième face de la couche à mesurer, technique dite du temps de parcours, doit alors être substituée une technique de mesure à partir des interférences entre ces deux échos, technique dite d'interférométrie ultrasonore.

On connaît déjà des dispositifs (EP-A-0062272) qui comprennent des moyens mettant en oeuvre un procédé de métrologie par interférence d'un signal ultrasonore dont la fréquence est modulée dans le temps.

Ce signal balaie périodiquement une bande de fréquence et il en résulte généralement au moins un écho de battement ou d'interférence dont on soumet le niveau à une évaluation critique.

Le niveau de cet écho de battement dépend en fait du rendement de conversion électro-acoustique du transducteur en fonction de la fréquence et de la différence de phase entre les deux échos qui se superposent, donc de l'épaisseur de la couche d'où ils proviennent.

Ce niveau peut être directement exploité dans un circuit de mesure.

Lors du balayage en fréquence, on constate l'apparition de phénomènes dit de résonance et d'anti-résonance.

Ces phénomènes se traduisent respectivement par une augmentation et une diminution du niveau des échos reçus représentatifs de l'interférence.

Pour distinguer les fréquences de résonance et d'anti-résonance, on détecte les maxima et les minima qui en résultent.

L'invention s'applique plus particulièrement mais non exclusivement à cette dernière méthode.

Il est connu que les différences $(DF_r)$ et $(DF_{ar})$ existant respectivement entre deux fréquences de résonance $(F_r)$ successives ou deux fréquences d'anti-résonance $(F_{ar})$ successives sont liées à l'épaisseur (e) du matériau et à la vitesse de propagation (v) des ultrasons dans ce matériau selon la formule

$$e = v/2DF_r = v/2DF_{ar}$$

Dans tous les cas, on sait que pour obtenir des performances optiriales, l'excursion en fréquence doit s'étendre sur une large bande et notamment dans une bande de fréquences dont les limites sont dans un rapport de un à cinq.

En effet, lorsque cette condition n'est pas remplie, on trouve des situations pour lesquelles deux films ou deux couches, ayant entre elles des épaisseurs différentes, par exemple dans un rapport de un à trois, donnent la même image.

Malheureusenent, dans la pratique, il est difficile de réaliser une source ultrasonore, ayant une efficacité élevée et constante sur une plage de fréquence aussi étendue que celle évoquée ci-dessus.

Il en résulte des variations du rendement de conversion du transducteur électro-acoustique en fonction de la fréquence et donc des différences de niveaux qui entraînent une modification de la figure d'interférence recueillie ce qui peut provoquer des erreurs de mesure lorsqu'on analyse globalement les résultats obtenus pour déterminer l'épaisseur recherchée.

On comprend que le problème ainsi posé est sans rapport avec celui évoqué plus haut au chapitre de la technique du temps de parcours où des moyens règlent l'installation en fonction non pas du transducteur nais de la nature de la couche à mesurer.

Cette variation de rendement est particulièrement sensible lorsqu'en interférométrie ultra-sonore, on exploite directement l'amplitude (les minima ou maxima) des échos d'interférence nais également lorsqu'on utilise ces échos pour déterminer la position des fréquences de résonance et d'anti-résonance.

L'invention se propose de résoudre ce problème par compensation des variations de rendement de conversion du transducteur électro-acoustique en fonction de la fréquence.

Elle permet donc la détermination précise de l'épaisseur d'une couche d'un matériau, indépendamment des variations du niveau du signal ultrasonore inhérentes à la variation de la fréquence du signal ultrasonore.

A cet effet, l'invention a pour objet un procédé notamment caractérisé en ce qu'après chaque émission d'une impulsion ultrasonore vers le milieu dont on cherche à déterminer l'épaisseur :

– on détecte parmi les échos engendrés, d'une part, au moins un écho de battement caractéristique de l'interférence d'échos dans le milieu considéré et d'autre part, au moins un écho dit écho pilote temporairement décalé de l'écho de battement et dont l'amplitude est caractéristique du facteur de conversion électro-acoustique du transducteur en fonction de la fréquence, le coefficient de réflexion de cet écho pilote ne dépendant pas de la fréquence,

– on élabore des signaux chacun représentatif de l'amplitude d'un des échos détectés à savoir l'un de battement et l'autre pilote,

– on sélectionne chacun de ces signaux de battement et pilote pour les adresser le premier au dispositif de traitement permettant d'établir au moins ultérieurement l'épaisseur de la couche mesurée, le second à un dispositif d'analyse dans lequel on mémorise l'amplitude de ce signal pilote puis,

– à un moment choisi, avant qu'ait lieu la détection des échos pilote et de battement engendrés par l'émission ultrasonore suivante, dans un dispositif, on compare le signal pilote à une consigne prédéterminée et on élabore une commande proportionnelle à l'écart constaté,

– en fonction de cette commande, par un moyen correcteur situé en amont du dispositif de traitement des échos, on influence de manière uniforme l'amplitude des signaux représentatifs d'au moins deux échos, dont d'une part, l'écho de battement caractéristique de l'interférence issue du milieu contrôle et, d'autre part, l'écho dit pilote,

– on reprend le procédé à l'étape initiale de détection de l'écho de battement et de l'écho pilote engendrés par l'émission suivante et ainsi de suite.

L'invention a également pour objet un dispositif en vue de la mise en oeuvre de ce procédé ainsi qu'un dispositif de mesure comprenant un tel dispositif.

Elle sera bien comprise à l'aide de la description ci-après faite à titre d'exemple non limitatif, en regard du dessin ci-annexé qui représente schématiquement:

– figure 1 : un synoptique d'une installation permettant de mettre en oeuvre le procédé,

– figure 2 : un graphique représentant l'échelonnement des échos engendrés par des émissions ultrasonores successives, avec en abscisse du graphisme, une variable temporelle et, en ordonnée, une variable liée à l'amplitude des échos.

En se reportant au dessin, on voit que, pour déterminer l'épaisseur "e" d'un milieu 1 et notamment d'une couche 1 de matériau 2 portée par un support 3, on utilise une source ultrasonore 4.

Cette source 4 est placée au voisinage de la face externe supérieure 5 de la couche 1 à mesurer.

On note que, classiquement, la source 4 n'est pas en contact direct avec la face externe de la couche, mais au contraire par l'intermédiaire d'un milieu liquide de couplage 6 tel de l'eau.

Comme cela apparaît sur le dessin, la source 4 comprend un élément transducteur 7 qui permet de transformer en vibrations ultrasonores un signal électrique issu d'un ensemble générateur 8.

Sans pour autant que cela ait de valeur limitative pour l'invention, le signal électrique se présente sous la forme d'un train de sinusoïdes de fréquence variable progressivement et le transducteur transforme ce signal en une vibration de fréquences ultrasonores dite impulsion ultrasonore.

Outre sa fonction d'émission d'ondes ultrasonores, l'élément transducteur 7 assure classiquement la fonction de réception des échos engendrés par l'émission d'impulsions ultrasonores.

Les échos détectés sont bien entendu transformés en signaux électriques qui sont, quant à eux, dirigés vers un dispositif de traitement 9.

On sait que pour les fréquences élevées, notamment au delà de quelques dizaines de mégahertz, il est nécessaire d'équiper la face 10 du transducteur 7 orientée vers la couche de matériau à étudier d'un élément 11 retardateur de la propagation des ondes ultrasonores.

Cet élément retardateur 11 connu sous le nom de ligne à retard permet généralement d'induire un retard de propagation suffisant pour améliorer la séparation entre les impulsions ultrasonores émises et les impulsions ultrasonores reçues.

L'ensemble constitué par la source et le milieu à contrôler forme d'ailleurs une ligne acoustique.

Quant à l'ensemble générateur des signaux électriques, bien que cela ne soit pas limitatif pour l'invention, il s'agit d'un dispositif qui comprend principalement :

– un wobulateur 12 délivrant un signal électrique sinusoïdal d'amplitude constante mais dont la fréquence varie entre deux limites,
– un moyen de commande impulsionnel 13,
– un interrupteur électronique 14 qui, piloté par le moyen de commande impulsionnel 13, découpe le signal issu du wobulateur 12 afin d'obtenir une succession de trains de sinusoïdes (non représentés).

Comme on le sait, il est difficile de réaliser une source ultrasonore ayant un rendement de conversion constant et donc une efficacité constante sur une plage de fréquence aussi étendue que celle requise pour la fiabilité de la mesure.

Or, pour une même épaisseur "e" contrôlée, une variation de rendement et donc de l'amplitude d'une impulsion ultrasonore en fonction de la fréquence, entraîne une modification de la figure d'interférence 15 recueillie et notamment une modification de l'amplitude de l'écho de battement 16.

Comme cela a été évoqué au préambule, l'exploitation directe de ces figures d'interférences quelles qu'elles soient, induit des erreurs de mesure.

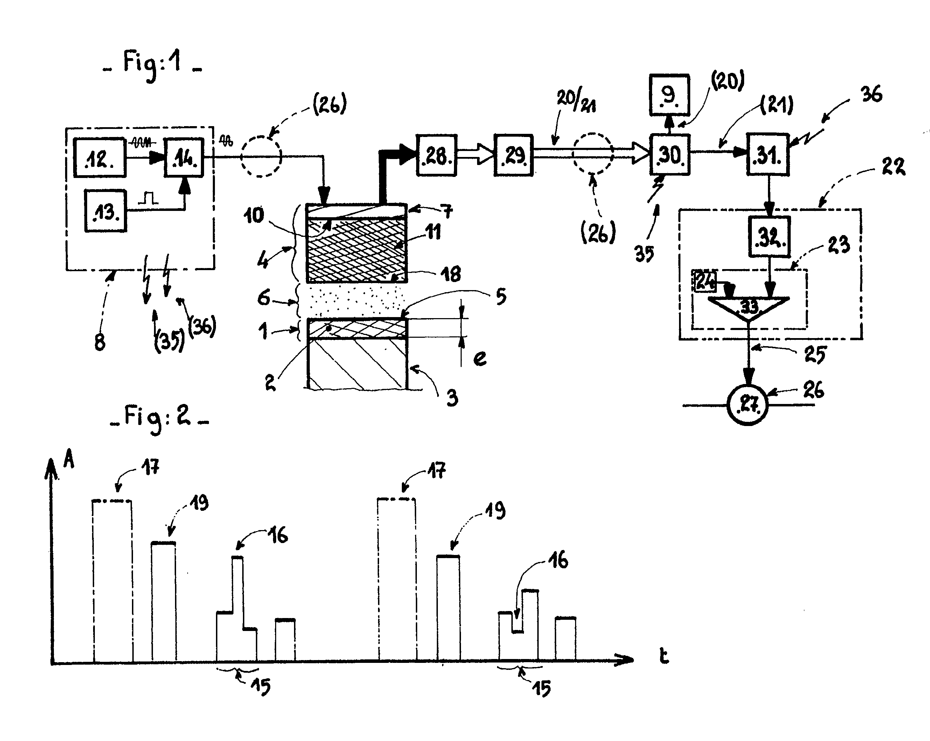

On voit en figure 2 que l'émission 17 d'une impulsion ultrasonore est suivie de la réception d'un certain nombre d'échos et de groupes d'échos issus des différents milieux traversés par l'impulsion ultrasonore.

Sur cette figure, l'émission 17 d'impulsion représentée est fictive et pour cette raison elle a été dessinée en traits mixtes fins.

On sait que l'élément retardateur 11 (ligne à retard) présente la particularité de générer, au moins par sa face inférieure 18 formant l'interface 18 entre la source 4 et le milieu de couplage, un écho 19 dont le coefficient de réflexion ne dépend pas de la fréquence.

Bien qu'un autre écho 19 pourrait être isolé et utilisé à cette fin, c'est l'écho 19 de l'élément retardateur qui, de préférence, sera utilisé comme écho pilote 19 et dénommé comme tel. Cet écho pilote 19 a son amplitude principalement liée à celle de l'impulsion ultrasonore émise par la source 4.

L'amplitude de l'impulsion ultrasonore étant, comme cela a été évoqué plus haut, liée au rendement de conversion en fonction de la fréquence, il est donc aisé de comprendre que l'amplitude de l'écho pilote 19 est caractéristique du facteur de conversion électro-acoustique du transducteur en fonction de la fréquence.

L'invention se propose d'exploiter cette constatation pour corriger automatiquement toute variation de rendement de conversion électro-acoustique du transducteur en fonction de la fréquence et à cet effet, après chaque émission 17 d'une impulsion ultrasonore vers le milieu 1 dont on cherche à déterminer l'épaisseur :

– on détecte parmi les échos engendrés, d'une part, au moins un écho de battement 16 caractéristique de l'interférence d'échos dans le milieu 1 considéré et d'autre part, au moins un écho 19 dit écho pilote temporairement décalé de l'écho de battement 16 et dont l'amplitude est caractéristique du facteur de conversion électro-acoustique du transducteur en fonction de la fréquence, le coefficient de réflexion de cet écho pilote ne dépendant pas de la fréquence,
– on élabore des signaux 20, 21 chacun représentatif de l'amplitude d'un des échos détectés à savoir l'un de battement 16 et l'autre pilote 19,
– on sélectionne chacun de ces signaux de battement 20 et pilote 21 pour les adresser le premier 20 au dispositif de traitement 9 permettant d'établir au moins urtérieurement l'épaisseur de la couche mesurée, le second 21 à un dispositif d'analyse 22 dans lequel on mémorise l'amplitude de ce signal pilote 21 puis,
– à un moment choisi, avant qu'ait lieu la détection des échos pilote 19 et de battement 16 engendrés par l'émission ultrasonore suivante, dans un dispositif 23, compare le signal pilote 21 à une consigne prédéterminée 24 et on élabore une commande 25 proportionnelle à l'écart constaté,
– en fonction de cette commande, par un moyen correcteur 26 situé en amont du dispositif de traitement 9 des échos, on influence de manière uniforme l'amplitude des signaux représentatifs d'au moins deux échos, dont d'une part, l'écho de battement 16 caractéristique de l'interférence issue du milieu contrôle et, d'autre quart, l'écho pilote 19,
– on reprend le procédé à l'étape initiale de détection de l'écho de battement 16 et de l'écho pilote 19 engendrés par l'émission suivante et ainsi de suite.

L'ajustement du niveau du signal de battement par le signal pilote émis à une certaine fréquence permet d'obtenir des signaux de battement de niveaux comparables dans le temps quelles que soient les variations de rendement de conversion électroacoustique du transducteur en fonction de la fréquence.

Dans un mode préféré de mise en oeuvre, l'écho pilote 19 sélectionné est l'écho qui apparaît au niveau de l'interface entre la ligne à retard et le milieu de couplage.

Selon une forme préférée de mise en oeuvre de l'invention, pour constituer le moyen correcteur 26 en vue d'influencer l'amplitude des signaux 21, 20 reflétant l'amplitude des échos pilote 19 et de battement 16, on utilise un amplificateur 27 dont le gain peut être ajusté en fonction du signal électrique de commande 25.

Conformément à une forme préférée de réalisation de l'invention:

— on place l'amplificateur 27 entre la source ultrasonore 4 et l'entrée du dispositif 9 de traitement des échos générés de manière à amplifier le niveau des signaux réflétant tous les échos générés.

Suivant une autre forme de réalisation de l'invention, on place l'amplificateur 27 entre l'ensemble générateur 8 de signaux électriques et la source ultrasonore 4.

L'une ou l'autre de ces deux solutions donne de bons résultats.

L'homme de l'art est à même de déterminer la consigne 24 mais de préférence cette consigne est établie en fonction du plus faible niveau décelable de l'écho de battement et du gain maximun de l'amplificateur 27.

Outre une source ultrasonore, un ensemble générateur de signaux électriques, un dispositif 9 de traitement des signaux électriques reflétant l'amplitude des échos ultrasonores générés dans la ligne acoustique par les impulsions ultrasonores, les moyens pour la mise en oeuvre de l'invention comprennent :

    — un moyen de détection 28 d'au moins un écho de battement 16 caractéristique de l'interférence d'échos dans le milieu et au moins un écho 19 dit écho pilote temporairement décalé de l'écho de battement 16 et dont l'amplitude est caractéristique du facteur de conversion électro-acoustique du transducteur en fonction de la fréquence indépendamment de tout paramètre susceptible d'en altérer le niveau de manière aléatoire,

    — un moyen 29 permettant d'élaborer à partir de ces échos 16, 19 des signaux 20, 21 représentatifs de leur amplitude,

    — des moyens 30, 31 permettant de sélectionner chacun des signaux de battement 20 et pilote 21 et de les adresser le premier 20 au dispositif de traitement 9 permettant d'établir au moins ultérieurement l'épaisseur de la couche mesurée, le second 21 à un dispositif d'analyse 22,

    — un dispositif d'analyse 22 comportant :

        . un moyen 32 permettant d'une part de mémoriser l'amplitude du signal pilote 21, sensiblement jusqu'à la détection des échos pilote 19 et de battement 16 engendrés par l'émission suivante et, d'autre part, d'adresser en temps voulu le signal pilote 21 mémorisé représentatif de l'écho pilote 19,

        . un moyen 33 en vue, d'une part, de comparer ce signal pilote 21 à une valeur prédéterminée 24 et, d'autre part, d'élaborer une commande 25 proportionnelle à l'écart constaté,

        . un moyen correcteur 26 situé en amont du dispositif de traitement 9 des échos engendrés par l'émission ultrasonore suivante et qui permet d'influencer de manière uniforme l'amplitude des signaux représentatifs d'au moins deux échos, dont d'une part, l'écho de battement 16 caractéristique de l'interférence issue du milieu contrôle et, d'autre part, l'écho dit pilote 19.

Dans un mode préféré de réalisation, chacun des moyens 30, 31 permettant de sélectionner chacun des signaux de battement 20 et pilote 21 est constitué par une porte électronique 30, 31 pilotée par un signal 35, 36 synchronisé avec le moyen de commande impulsionnel 13 équipant l'ensemble 8 générateur de signaux électriques.

Dans un mode préféré de réalisation, le moyen permettant de comparer l'amplitude du signal pilote 21 à une consigne 24 préétablie puis de générer une commande proportionnelle à l'écart constaté est un amplificateur différentiel.

L'homme de l'art est à même de déterminer le moment propice à l'ouverture de chacune des portes 30, 31 compte tenu de la répartition temporelle des échos après l'impulsion les ayant générés.

Dans un mode préféré de réalisation, le moyen de mémorisation 32 est constitué d'un échantillonnement bloqueur.

De préférence, le dispositif de l'invention comprend des moyens en vue de soustraire les dispositifs 9 et 22 de traitement des échos de l'influence des variations de rendement de conversion électro-acoustique du transducteur 7 en fonction de la fréquence variable progressivement des trains de sinusoïdes issus de l'ensemble générateur 8.

## Revendications

1. Procédé de correction automatique des variations de rendement de conversion d'un transducteur électro-acoustique en fonction de la fréquence en vue de l'amélioration de la précision d'un dispositif de mesure de l'épaisseur de couches de matériau par interférométrie ultrasonore, lequel dispositif comprend :

    — un ensemble (8) générateur de signaux électriques tels des trains de sinusoïdes de fréquence variable progressivement,

    — une source (4) transductrice de ces signaux électriques en impulsions ultrasonores, laquelle source comprend un transducteur (7) et un élément retardateur de propagation (11) interposé entre le milieu de couplage (6) et la couche (1) de matériau,

    — un dispositif (9) en vue de recueillir et de traiter les échos générés par les émissions d'impulsions ultrasonores,

le procédé étant **CARACTERISE** en ce qu'après chaque émission (17) d'une impulsion ultrasonore vers le milieu (1) dont on cherche à déterminer l'épaisseur :

– on détecte parmi les échos engendrés, d'une part, au moins un écho de battement (16) caractéristique de l'interférence d'échos dans le milieu (1) considéré et d'autre part, au moins un écho (19) dit écho pilote temporairement décalé de l'écho de battement (16) et dont l'amplitude est caractéristique du facteur de conversion électroacoustique du transducteur en fonction de la fréquence, le coefficient de réflexion de cet écho pilote ne dépendant pas de la fréquence,

– on élabore des signaux (20, 21) chacun représentatif de l'amplitude d'un des échos détectés à savoir l'un de battement (16) et l'autre pilote (19),

– on sélectionne chacun de ces signaux de battement (20) et pilote (21) pour les adresser le premier (20) au dispositif de traitement (9) permettant d'établir au moins ultérieurement l'épaisseur de la couche mesurée, le second (21) à un dispositif d'analyse (22) dans lequel on mémorise l'amplitude de ce signal pilote (21) puis,

– à un moment choisi, avant qu'ait lieu la détection des échos pilote (19) et de battement (16) engendrés par l'émission ultrasonore suivante, dans un dispositif (23), on compare le signal pilote (21) à une consigne prédéterminée (24) et on élabore une commande (25) proportionnelle à l'écart constaté,

– en fonction de cette commande, par un moyen correcteur (26) situé en amont du dispositif de traitement (9) des échos, on influence de manière uniforme l'amplitude des signaux représentatifs d'au moins deux échos, dont d'une part, l'écho de battement (16) caractéristique de l'interférence issue du milieu contrôle et, d'autre part, l'écho dit pilote (19),

– on reprend le procédé à l'étape initiale de détection de l'écho de battement (16) et de l'écho pilote (19) engendrés par l'émission suivante et ainsi de suite.

2. Procédé selon la revendication 1 **caractérisé** en ce que, conjointement à l'écho de battement (16), on détecte l'écho pilote (19) qui apparaît au niveau de la face inférieure (18) formant l'interface entre la source (4) et le milieu de couplage, et dont le coefficient de réflexion ne dépend pas de la fréquence.

3. Procédé selon la revendication 1 **caractérisé** en ce que, pour constituer le moyen (26) en vue d'influencer l'amplitude des signaux (21, 20) reflétant l'amplitude des échos pilote (19) et de battement (16), on utilise un amplificateur (27) dont le gain peut être ajusté en fonction du signal électrique de commande (25).

4. Procédé selon l'une quelconque des revendications 1 à 3 **caractérisé** en ce qu'on place l'amplificateur (27) entre la source ultrasonore (4) et l'entrée du dispositif (9) de traitement des échos générés de manière à amplifier le niveau des signaux réflétant tous les échos générés.

5. Procédé selon l'une quelconque des revendications 1 à 3 **caractérisé** en ce qu'on place l'amplificateur (27) entre l'ensemble générateur (8) de signaux électriques et la source ultrasonore (4).

6. Dispositif en vue de la mise en oeuvre du procédé selon l'une quelconque des revendications 1 à 5 **caractérisé** en ce qu'il comprend :

– un moyen de détection (28) d'au moins un écho de battement (16) caractéristique de l'interférence d'échos dans le milieu et au moins un écho (19) dit écho pilote temporairement décalé de l'écho de battement (16) et dont l'amplitude est directement liée au facteur de conversion électroacoustique du transducteur en fonction de la fréquence, le coefficient de réflexion de cet écho pilote ne dépendant pas de la fréquence,

– un moyen (29) permettant d'élaborer à partir de ces échos (16, 19) des signaux (20, 21) représentatifs de leur amplitude,

– des moyens (30, 31) permettant de sélectionner chacun des signaux de battement (20) et pilote (21) et de les adresser le premier (20) au dispositif de traitement (9) permettant d'établir au moins ultérieurement l'épaisseur de la couche mesurée, le second (21) à un dispositif d'analyse (22),

– un dispositif d'analyse (22) comportant :

. un moyen (32) permettant d'une part de mémoriser l'amplitude du signal pilote (21), sensiblement jusqu'à la détection des échos pilote (19) et de battement (16) engendrés par l'émission suivante et, d'autre part, d'adresser en temps voulu le signal pilote (21) mémorisé représentatif de l'écho pilote (19),

. un moyen (33) en vue, d'une part, de comparer ce signal pilote (21) à une valeur prédéteminée (24) et, d'autre part, d'élaborer une commande (25) proportionnelle à l'écart constaté,

. un moyen correcteur (26) situé en amont du dispositif de traitement (9) des échos engendrés par l'émission ultrasonore suivante et qui permet d'influencer de manière uniforme l'amplitude des signaux représentatifs d'au moins deux échos, dont d'une part, l'écho de battement (16) caractéristique de l'interférence issue du milieu contrôle et, d'autre part, l'écho dit pilote (19).

7. Dispositif selon la revendication 6 **caractérisé** en ce que chacun des moyens (30, 31) permettant de sélectionner chacun des signaux de battement (20) et pilote (21) est constitué par une porte électronique (30, 31) pilotée par un signal (35, 36) synchronisé avec le moyen de commande impulsionnel (13) équipant l'ensemble (8) générateur de signaux électriques.

8. Dispositif selon la revendication 6 **caractérisé** en ce que le moyen permettant de comparer l'amplitude du signal pilote (21) à une consigne (24) préétablie puis de générer une commande proportionnelle à l'écart constaté est un amplificateur différentiel.

9. Dispositif selon la revendication 6 **caractérisé** en ce que le moyen de mémorisation (32) est constitué d'un échantillonnage bloqueur.

10. Dispositif de mesure de l'épaisseur de couches de matériau **caractérisé** en ce qu'il comprend un dispositif selon l'une quelconque des revendications 6 à 9.

## Patentansprüche

1. Verfahren zur automatischen Korrektur des Wirkungsgrad eines elektroakustischen Wandlers in Abhängigkeit von der Frequenz zum Zwecke der Verbesserung der Genauigkeit einer Vorrichtung zur Messung der Materialschichtdicke durch Ultraschall-Inferometrie, wobei die Vorrichtung umfaßt:
   – einen Generator (8) für elektrische Signale, wie Sinuswellen mit fortschreitend variabler Frequenz,
   – eine Quelle (4), die diese elektrischen Signale in Ultraschallimpulse umwandelt, wobei die Quelle ein Wandler (7) und ein Element zur Verzögerung der Übertragung (11) umfaßt, angeordnet zwischen dem Kupplungsmittel (6) und der Materialschicht (1),
   – eine Vorrichtung (9) zum Sammeln und Verarbeiten der durch die Emission der Ultraschallimpulse erzeugten Echos,
   dadurch gekennzeichnet, daß man nach jeder Emission (17) eines Ultraschallimpulses gegen die Schicht (1), deren Dicke bestimmt werden soll:
   – aus den reflektierten Echos einerseits mindestens ein Übertragungsecho (16), das charakteristisch ist für die Interferenz der Echos in der betrachteten Schicht, und andererseits mindestens ein Echo (19), das Pilotecho genannt wird, das zeitlich gegenüber dem Übertragungsecho (16) verschoben ist und dessen Amplitude charakteristisch ist für den elektroakustischen Umwandlungsfaktor des Wandlers in Abhängigkeit von der Frequenz, bestimmt, wobei der Reflexionskoeffizient dieses Pilotechos nicht von der Frequenz abhängig ist,
   – Signale (20, 21) ermittelt, die jeweils repräsentativ sind für die Amplitude eines der untersuchten Echos, nämlich des Überlagerungsechos (16) oder des Pilotechos (19),
   – jeweils aus diesem Überlagerungssignal (20) und Pilotsignal (21) auswählt, um das erstere (20) an die Verarbeitungsvorrichtung zu leiten, was ermöglicht, zumindest danach die Dicke der gemessenen Schicht zu bestimmen, und das zweite (21) in eine Analysenvorrichtung (22) zu leiten, in welcher man dann die Amplitude dieses Pilotsignals (21) speichert,
   – zu einer bestimmten Zeit vor der Ermittlung des Pilotechos (19) und des Übertragungsechos (16) die durch die Emission der folgenden Ultraschallsignale erzeugt worden sind, das Pilotsignal (21) in einer Vorrichtung (23) mit einem bestimmten Wert (24) vergleicht und eine Regelgröße (25) erhält, die der gemessenen Abweichung proportional ist,
   – in Abhängigkeit von dieser Regelgröße durch eine Korrekturvorrichtung (26), die oberhalb der Verarbeitungsvorrichtung (9) für die Echos gelegen ist, in gleichförmiger Weise die Amplitude der Signale, die repräsentativ sind für mindestens zwei Echos, einerseits das Überlagerungsecho (16), das charakteristisch ist für die von der Kontrollschicht verursachten Interferenz, und andererseits das Pilotecho (19), beeinflußt,
   – das Verfahren der Anfangsstufe der Bestimmung des Überlagerungsechos (16) und des Pilotechos (19), die durch die folgende Emission erzeugt worden sind, wiederholt, usw.

2. Verfahren nach Anspruch 1, dadurch gekennzeichnet, daß man gleichzeitig mit dem Überlagerungsecho (16) das Pilotecho (19) bestimmt, das auf dem Niveau der unteren Fläche (18) erscheint, die die Zwischenfläche bildet zwischen der Quelle (4) und dem Kupplungsmittel, und deren Reflexionskoeffizient nicht von der Frequenz abhängt.

3. Verfahren nach Anspruch 1, dadurch gekennzeichnet, daß man zur Bildung der Vorrichtung (26) zur Beeinflussung der Amplitude der Signale (21, 20), die die Amplitude des Pilotechos (19) und des Überlagerungsechos (16) widerspiegeln, einen Verstärker (27) verwendet, dessen Verstärkung eingestellt werden kann in Abhängigkeit vom elektrischen Befehlssignal (25).

4. Verfahren nach irgendeinem der Ansprüche 1 bis 3, dadurch gekennzeichnet, daß man den Verstärker (27) zwischen der Ultraschallquelle (4) und dem Eingang der Vorrichtung (9) zur Behandlung der erzeugten Echos durch Verstärkung der Signale und Reflektieren aller erzeugten Echos anordnet.

5. Verfahren nach irgendeinem der Ansprüche 1 bis 3, dadurch gekennzeichnet, daß man den Verstärker (27) zwischen dem Generator (8) für elektrische Signale und der Ultraschallquelle (4) anordnet.

6. Vorrichtung zur Durchführung des Verfahrens nach irgendeinem der Ansprüche 1 bis 5, dadurch gekennzeichnet, daß sie umfaßt:

– eine Vorrichtung zur Detektion (28) mindestens eines Überlagerungsechos (16), das charakteristisch ist für die Interferenz der Echos in dem Mittel und einem Echo (19), das Pilotecho genannt wird, das verschoben ist gegenüber dem Überlagerungsecho (16) und dessen Amplitude direkt verbunden ist mit dem elektroakustischen Umwandlungsfaktor des Übertragers in Abhängigkeit von der Frequenz, wobei der Reflexionskoeffizient dieses Pilotechos nicht von der Frequenz abhängt,

– eine Vorrichtung (29), die es ermöglicht, aus diesen Echos (16, 19) Signale (20, 21) zu ermitteln, die repräsentativ sind für ihre Amplitude,

– Vorrichtungen (30, 31), die die Auswahl jeweils des Überlagerunssignals (20) und Pilotsignals (21) und die Übermittlung des ersteren (20) an die Verarbeitungsvorrichtung (9) ermöglichen, und zumindest danach die Bestimmung der Dicke der gemessenen Schicht ermöglichen, und die Übermittlung der zweiten (21) an eine Analysenvorrichtung (22) ermöglichen,

– eine Analysenvorrichtung (22), beinhaltend:

. eine Einrichtung (32), die einerseits die Speicherung der Amplitude des Pilotsignals (21) ermöglicht, insbesondere bis zur Detektion des Pilotechos (19), und Überlagerunsechos (16), die erzeugt wurden durch die folgende Emission, und die andererseits die Übermittlung des gespeicherten Pilotsignals (21), das repräsentativ ist für das Pilotecho (19), in gewünschter Zeit ermöglicht,

. eine Einrichtung (33) einerseits zum Vergleich dieses Pilotsignals (21) mit einem vorbestimmten Wert (24) und andererseits zur Erstellung eines Befehlssignals (25), das einem bestimmten Abstand proportional ist,

. eine Korrekturvorrichtung (26), die oberhalb der Verarbeitungsvorrichtung (9) für die durch die folgende Ultraschallemission erzeugten Echos angeordnet ist, und die eine gleichförmige Beeinflussung der Amplitude der Signale, die repräsentativ sind für mindestens zwei Echos, einerseits das Überlagerungsecho (16), das charakteristisch ist für die vom Kontrollmittel hervorgerufene Interferenz, und andererseits das sogenannte Pilotecho (19) ermöglicht.

7. Vorrichtung nach Anspruch 6, dadurch gekennzeichnet, daß jede der Einrichtungen (30, 31), die eine Auswahl jeweils des Überlagerungssignals (20) und des Pilotsignals (21) ermöglichen, durch ein elektronisches Tor (30, 31) gebildet wird, das gesteuert wird durch ein Signal (35, 36), das mit einer Impulssteuereinrichtung (13) synchronisiert ist, die das Generatorensemble (8) mit elektrischen Signalen versorgt.

8. Vorrichtung nach Anspruch 6, dadurch gekennzeichnet, daß die Einrichtung, die den Vergleich der Amplitude des Pilotsignals (21) mit einem Einstellwert (24) ermöglicht, der vor der Erzeugung eines Befehls erzeugt wird, der proportional einem bestimmten Abstand ist, ein Differentialverstärker ist.

9. Vorrichtung nach Anspruch 6, dadurch gekennzeichnet, daß die Speichereinrichtung (32) aus einem Block-Sampler gebildet wird.

10. Vorrichtung zur Messung von Materialschichtdicken, dadurch gekennzeichnet, daß sie aus einer Vorrichtung nach irgendeinem der Ansprüche 6 bis 9 besteht.

## Claims

1. A method of automatically correcting the variations in conversion efficiency of an electro-acoustic transducer as a function of frequency, with a view to improving the accuracy of a device for measuring the thickness of layers of material by ultrasonic interferometry, which device comprises:

– a unit (8) for generating electric signals such as trains of sine waves of progressively variable frequency,

– a source (4) for transducing these electric signals into ultrasonic pulses, which source comprises a transducer (7) and a propogation delay element (11) inserted between the coupling medium (6) and the layer (1) of material,

– a device (9) for acquiring and processing the echoes generated by the transmissions of ultrasonic pulses,

the method being CHARACTERISED in that, after each transmission (17) of an ultrasonic pulse towards the medium (1) whose thickness is to be determined, :

– firstly, at least one beat echo (16) is detected amongst the echoes generated which is characteristic of the interference of echoes in the medium (1) under consideration and, secondly, at least one echo (19) - called the pilot echo - is detected which is temporarily offset from the beat echo (16) and whose amplitude is characteristic of the electro-acoustic conversion factor of the transducer as a function of frequency, the reflection coefficient of this pilot echo not being dependent on frequency,

– signals (20, 21) are generated, each representative of the amplitude of one of the echoes detected, i.e. the one a beat echo (16) and the other a pilot echo (19),

– each of these beat (20) and pilot (21) signals is selected in order to address them, the former (20) to the processing device (9) which allows the thickness of the measured layer to be established, later on at least, and the latter (21) to an analysis device (22) in which the amplitude of this pilot signal (21) is stored, and then,
– at a chosen moment, before the pilot (19) and beat (16) echoes generated by the subsequent ultrasonic transmission have been detected, and in a device (23), the pilot signal (21) is compared with a predetermined setting (24) and a control signal (25) is generated which is proportional to the discrepancy observed,
– the amplitude of the signals representative of at least two echoes - on the one hand, the beat echo (16) characteristic of the interference originating from the checking medium and, on the other, the so-called pilot echo (19) - is influenced in a uniform manner as a function of this control signal by a corrector means (26) located upstream of the device (9) for processing the echoes,
– the method is restarted at the initial stage of detection of the beat echo (16) and the pilot echo (19) generated by the subsequent transmission and so on.

2. A method according to Claim 1, characterised in that, in conjunction with the beat echo (16), the pilot echo (19) is detected which appears at the level of the lower face (18) forming the interface between the source (4) and the coupling medium, and whose reflection coefficient is not dependent on frequency.

3. A method according to Claim 1, characterised in that, to form the means (26) for influencing the amplitude of the signals (21, 20) which reflect the amplitude of the pilot (19) and beat (16) echoes, an amplifier (27) is used whose gain can be adjusted as a function of the electric control signal (25).

4. A method according to any one of Claims 1 to 3, characterised in that the amplifier (27) is placed between the ultrasonic source (4) and the input of the device (9) for processing the echoes generated, so as to amplify the level of the signals reflecting all the echoes generated.

5. A method according to any one of Claims 1 to 3, characterised in that the amplifier (27) is placed between the unit (8) for generating electric signals and the ultrasonic source (4).

6. A device for implementing the method according to any one of Claims 1 to 5, characterised in that it comprises:
– a means (28) for detecting at least one beat echo (16) characteristic of the interference of echoes in the medium and at least one so-called pilot echo (19) which is temporarily offset from the beat echo (16) and whose amplitude is directly linked to the electro-acoustic conversion factor of the transducer as a function of frequency, the reflection coefficient of this pilot echo not being dependent on frequency,
– a means (29) making it possible to generate signals (20, 21) from these echoes (16, 19), which signals are representative of their amplitude,
– means (30, 31) making it possible to select each of the beat (20) and pilot (21) signals and to address them, the former (20) to the processing device (9) which makes it possible, later on at least, to establish the thickness of the measured layer, and the latter (21) to an analysis device (22),
– an analysis device (22) comprising:
. a means (32) making it possible, firstly, to store the amplitude of the pilot signal (21), substantially up till the detection of the pilot (19) and beat (16) echoes generated by the subsequent transmission and, secondly, in due course, to address the stored pilot signal (21) which is representative of the pilot echo (19),
. a means (33) for, firstly, comparing this pilot signal (21) with a predetermined value (24) and, secondly, for generating a control signal (25) which is proportional to the discrepancy observed,
. a corrector means (26) which is located upstream of the device (9) for processing the echoes generated by the subsequent ultrasonic transmission and which makes it possible to influence in a uniform manner the amplitude of the signals which are representative of at least two echoes: firstly, the beat echo (16) characteristic of the interference originating from the checking medium and, secondly, the so-called pilot echo (19).

7. A device according to Claim 6, characterised in that each of the means (30, 31) allowing selection of each of the beat (20) and pilot (21) signals is formed by an electronic gate (30, 31) controlled by a signal (35, 36) which is synchronized with the pulsed control means (13) which equips the unit (8) generating electric signals.

8. A device according to Claim 6, characterised in that the means which makes it possible to compare the amplitude of the pilot signal (21) with a pre-established setting (24) and then to generate a control signal which is proportional to the discrepancy observed, is a differential amplifier.

9. A device according to Claim 6, characterised in that the storage means (32) is formed by a sample-and-hold device.

10. A device for measuring the thickness of layers of material, characterised in that it comprises a device according to any one of the Claims 6 to 9.

_ Fig:1 _

_ Fig:2 _

EP 0 236 175 B1